Europäisches Patentamt

European Patent Office

Office européen des brevets

(11) Publication number: **0 222 548**
**A2**

## EUROPEAN PATENT APPLICATION

(21) Application number: 86308361.4

(22) Date of filing: 27.10.86

(51) Int. Cl.⁴: **H 04 N 5/217**

(30) Priority: 31.10.85 GB 8526853

(43) Date of publication of application:
20.05.87 Bulletin 87/21

(84) Designated Contracting States:
DE FR GB

(71) Applicant: BRITISH AEROSPACE PUBLIC LIMITED
COMPANY
11 Strand
London WC2N 5JT(GB)

(72) Inventor: Stewart, John British Aerospace Public Ltd.
Comp.
Army Weapons Division Six Hills Way
Stevenage Hertfordshire SG1 2AS(GB)

(74) Representative: Newell, William Joseph
D. Young & Co., 10 Staple Inn
London WC1V 7RD(GB)

(54) Image sensors.

(57) Blemishes on a CCD array 5 are mapped by uniformly illuminating the array immediately prior to use and storing the locations of the blemishes in a random access memory 15. During use the outputs from the blemish locations are ignored. The blemish locations are mapped each time the array is operational.

## IMAGE SENSORS

This invention relates to image sensors. In particular/though not exclusively the invention relates to image sensors comprising an array of image sensitive elements in which the output of some of said elements is required to be suppressed.

Solid state imagers such as charge coupled device (CCD) imagers often exhibit defects such as point or column blemishes which appear as spots, striations, or vertical lines on the reproduced video display. Such defects are cosmetically unacceptable and constitute a problem if the video output signal is to be used for autotracking and missile co-ordinate processing systems. The number of blemishes is a function of temperature with fewer blemishes being visible at room temperature than at the upper operating temperature limit.

A conventional method of blemish mapping consists of operating the sensor under worst case conditions during assembly of the sensor to reveal all possible defects and then storing the resulting X,Y co-ordinates of the blemishes in programmable read only memories (PROMs). There are however several disadvantages associated with this method. Blemish mapping becomes a time consuming process. The worst case number of blemishes are mapped even though a significant number of blemishes would not be seen in normal use. A dedicated PROM must be produced and kept with each spare sensor and installed with the sensor. PROMs consume a significant amount of power and their availability in suitable formats is limited.

According to one aspect of this invention, there is provided image sensing apparatus including an image sensor comprising an array of pixels, monitoring means operable during a setting routine to monitor the output of each pixel in turn thereby to identify defective pixels, programmable store means, storing means for storing in said store means data representative of the location of said defective pixel elements, and suppression means operable during operation of the apparatus to suppress the output of defective pixels in correspondence with data stored in said programmable store means.

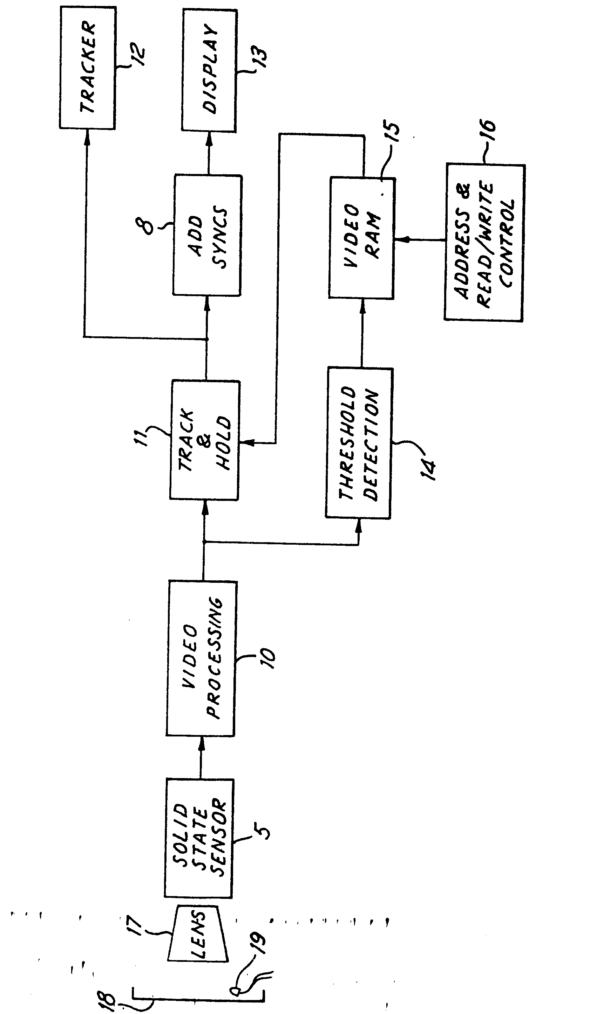

Further aspects will be apparent from the following description which is by way of example only, reference being made to the accompanying drawing which is a block diagram of an image sensing arrangement including an image sensor and blemish suppression.

Referring to the drawing, the sensor is a solid state CCD 5 employing a frame transfer type of readout. The CCD includes an integration region, a storage region and an output register. Signals generated by an image focussed on the integration region are integrated for a period equivalent to one television field, then transferred rapidly into the opaque storage region during what would be the field flyback period in a standard T.V. system. The output signal is then read out line by line from the storage region _via_ the output register which is of a parallel in, serial out type.

The serial output is processed by a video processing circuit 10 to produce a video signal. The video signal is supplied to a track and hold circuit 11, for a purpose to be described later, and the output from the track and hold circuit is supplied directly to an image tracker device 12 and also, after the addition at 8 of the various synchronisation signals necessary, to a display unit 13.

The arrangement includes one or more threshold detectors 14 which, during a setting routine, sample the video signal and output a signal indicative of whether the video signal is within the expected limit or limits. The output from the threshold detector is stored in a Random Access Memory (RAM) 15 which is addressed in accordance with the location of the particular pixel being sampled by an address and readwrite control unit. That is to say that the address and read and write control unit continually addresses the memory locations of the RAM in synchronism with the pixel output rate of the CCD sensor. A suitable form of RAM is a serial video RAM, NEC µPD41221C, which has an array of 320 vertical X 700 horizontal (total 224000) bits and an access time of 75 ns.

The sensor includes a lens 17 and a lens cover 18 together with a light source 19 located within the end cap and adapted to provide a diffuse, uniform illumination of the CCD sensor to, for example 50% saturation.

In use, at system power up with the lens cap in place a setting routine is automatically implemented wherein the CCD sensor is illuminated uniformly by the light source 19 so that blemishes are revealed on the output signal, which is passed to the threshold detector. The blemishes typically give a false "peak white" or a dark output and the threshold detector is set so as to ouptut "1"s when the video signal contains peak white or dark outputs and "0"s when it contains the expected output. As the video signal is monitored by the threshold detector, the address and read/write control writes into the appropriate memory location of the RAM either a "0" or a "1" depending on whether the pixel on the sensor to which the memory location corresponds is operating normally or is defective.

Thus every pixel of the CCD is allocated a blemish location in the RAM, and after the setting routine the RAM contains details of the X,Y co-ordinates of each blemish noted on the sensor.

Once the monitoring has been completed, the arrangement may switch over to normal operation. In normal operation, the threshold detectors are inoperative, and as the video signal for each frame of the CCD is read out, the address and read/write control 16 causes the information concerning each pixel to be read out from the RAM 15 and supplied to the track and hold circuit 11 in synchronism with the corresponding data in the video signal. The track and hold circuit 11 tracks the video signal and whilst supplied with "0"s from the video RAM passes the signal unmodified. When however a "1" is supplied to the track and hold circuit, this means that the video signal for that particular pixel is defective. The track and hold circuit therefore operates to continue to output the last (non-defective) signal until the track and hold circuit again receives an "0" signal address.

Consequently, in the event of a blemish on a pixel of the CCD, the output of the immediately previous unblemished pixel is used instead, and thus both the signal as supplied to the autotracker and as displayed have the outputs of the defective pixels suppressed and replaced by the output of the immediately preceding, non-defective, pixel.

The advantages of this arrangement are that no memory elements need be changed if a replacement sensor is introduced into the system and no initial blemish mapping or memory programming is required in production. Only those blemishes actually visible at a particular system power up are suppressed, resulting in maximum utilisation of available video at all times. The system would also automatically detect and suppress spurious signals generated by dust or dirt in the optics system. If desired, the threshold detector may detect excursions above or below a predetermined band rather than beyond a predetermined limit. The power consumption of a RAM is less than that of a PROM, and memory addressing of the RAM is simplified.

The arrangement specified above employs a light source to illuminate the sensor during testing. This however is not essential since the testing may be done merely with the lens cap in place, monitoring the dark current of the pixels.

The system may be used in conjunction with sensors other than CCDs in which blemishes on the sensor have a fixed relationship during use of the sensor.

## CLAIMS

1.     Image sensing apparatus including an image sensor (5) comprising an array of pixels, monitoring means (14) operable during a setting routine to monitor the output of each pixel element in turn thereby to identify defective pixels, programmable store means (15), storing means (16) for storing in said store means data representative of the location of said defective pixels, and suppression means (11) for suppressing the output of the defective pixels during operation of the apparatus in correspondence with the data stored in said programmable store means.

2.     Image sensing apparatus according to claim 1, wherein said programmable store means comprises a random access memory (15) having a respective memory store location for each of the pixels of said image sensor, and said storing means store data in each of said memory store locations representative of whether the associated pixel is defective.

3.     Image sensing apparatus as claimed in claim 1 and including illumination means (19) operable during said setting routine to provide substantially uniform illumination of said image sensor (5).

4.     Image sensing apparatus as claimed in claim 1, wherein said monitoring means includes a threshold detector (14) for indicating excessive excursions of said video signal during said setting routine.

5.     Image sensing apparatus as claimed in claim 1, wherein said suppression means includes a track and hold circuit (11) operable in response to data to form said programmable to either pass the output signal from said image sensor in unmodified form or to output a previously held signal.

1/1

0222548